# EUROPEAN PATENT APPLICATION

(11) **EP 1 925 474 A1**
(43) Date of publication of application: **28.05.2008**
(21) Application number: 06425804.9
(22) Date of filing: 24.11.2006
(51) Int. Cl.: B60H 1/00

(54) **A device for treating an air flow**

(71) Applicant: DENSO THERMAL SYSTEMS S.p.A., 10046 Poirino (Torino) (IT)
(72) Inventor: Bergamo, Luca Denso Thermal Systems Spa, 10046 Poirino (Torino) (IT)
(74) Representative: Marchitelli, Mauro

(57) **Abstract**

A device for treating a flow of air that is to be sent into the passenger compartment of a vehicle, comprising:
- a supporting casing (12) defining a cooling chamber (18), a heating chamber (20), a distribution chamber (22), a first opening (32) that sets the cooling chamber (18) in communication with the distribution chamber (22), a second opening (34) that sets the cooling chamber (18) in communication with the heating chamber (20), and a third opening (36) that sets the heating chamber (20) in communication with the distribution chamber (22);
- an evaporator (24), housed in the cooling chamber (18), and a heating radiator (28), housed in the heating chamber (20); and
- a mixing valve (45), which is mobile between a first position and a second position, in which in the first position the mixing valve (45) closes the first opening (32) and opens the second and third openings and in which in the second position the mixing valve (45) closes the second and third openings (34, 36) and opens the first opening (32).

The mixing valve (45) comprises:
- a control lever (46) having a first end (48) articulated to the casing (12);
- a main flap (50) articulated to a second end (52) of the control lever (46), the main flap (50) having a laterally projecting pin (52) that engages slidably a first guide (56) fixed with respect to the casing (12); and
- a secondary flap (58) having a first end (60) articulated to the main flap (50) and carrying at a second end a laterally projecting pin (62) that engages slidably a second guide (64) fixed with respect to the casing (12).

## Description

The present invention relates to a device for treating a flow of air that is to be sent into the passenger compartment of a vehicle. More precisely, the invention relates to a device according to the preamble of Claim 1.

The document No. EP-B1-1109689 describes a device for treating an air flow according to the prior art. In this known solution, a valve device is used that includes a flap that is articulated to the casing and is mobile between two positions. In the first position, the flap closes an opening for communication between a cooling chamber and a distribution chamber and opens two openings: one that sets a heating chamber in communication with the cooling chamber; and one that sets the heating chamber in communication with the distribution chamber. In the second position, the flap opens the opening for communication between the cooling chamber and the distribution chamber and closes the openings that set the heating chamber in communication with the cooling chamber and with the distribution chamber.

The document No. EP-B1-1109689 envisages the use of a single rigid flap having two regions designed to close different openings. This solution imposes limits on the dimensions of the openings for communication between the cooling chamber, the heating chamber, and the distribution chamber and imposes constraints as regards the arrangement of the chambers and the overall dimensions of the outer casing.

The document No. EP-A-1070611 describes an air-treatment device for vehicles, which comprises a valve device formed by two flaps articulated to one another. A first flap is articulated to the casing about a fixed axis, and the second flap has a pin that engages slidably a guide that is fixed with respect to the casing. The main drawback of this solution is that, in the position where the opening for communication between the cooling chamber and the distribution chamber is open, also the opening for communication between the heating chamber and the distribution chamber remains open. This penalises the efficiency of the device in the condition where it is desired to obtain maximum cooling of the air flow.

The purpose of the present invention is to provide a device for treating an air flow that will overcome the problems of the known solutions.

According to the present invention, said purpose is achieved by a device having the characteristics forming the subject of Claim 1.

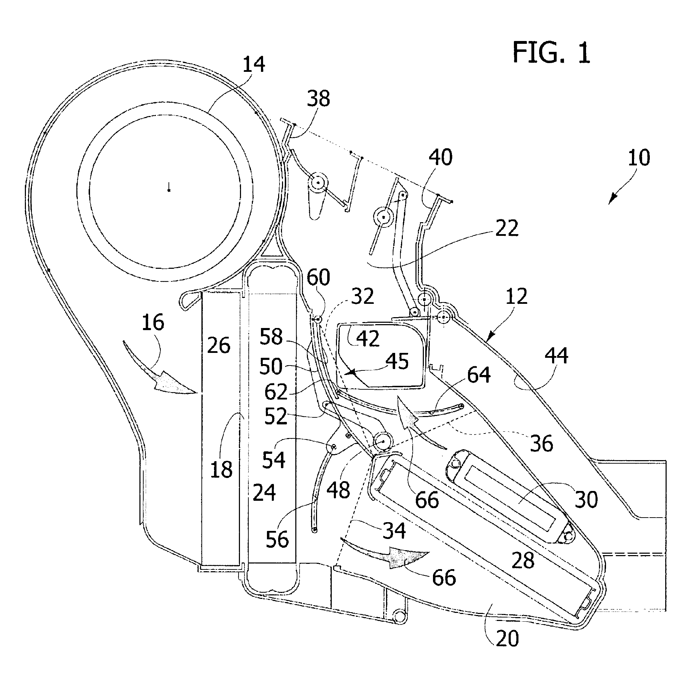

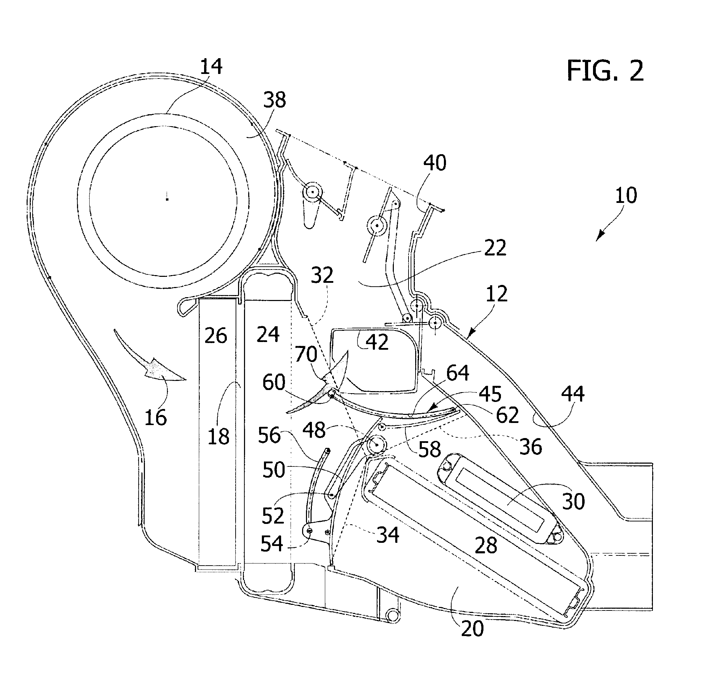

The characteristics and advantages of the device according to the present invention will emerge clearly from the ensuing detailed description, which is provided purely by way of non-limiting example, with reference to the attached drawings, in which Figures 1 and 2 are schematic views of a device according to the invention in two positions of operation.

With reference to the drawings, the number 10 designates a device for treating a flow of air that is to be sent into the passenger compartment of a vehicle. The device 10 comprises a supporting casing 12 made of injection-moulded plastic material. The casing 12 bears a centrifugal fan 14, which produces an air flow that moves in the direction indicated by the arrow 16.

Defined in the casing 12 are a cooling chamber 18, a heating chamber 20, and a distribution chamber 22. Housed in the cooling chamber is an evaporator 24 forming part of an air-conditioning system of the vehicle. Preferably, set upstream of the evaporator 24 is a filter 26. Housed in the heating chamber 20 is a heating radiator 28 supplied with the liquid for cooling the internal-combustion engine. An electric heater 30 can also be set in the heating chamber 20.

In the casing 12 three openings are defined, designated, respectively, by 32, 34 and 36 and represented schematically in the figures with dashed lines. The first opening 32 sets the cooling chamber 18 in communication with the distribution chamber 22. The second opening 34 sets the cooling chamber 18 in communication with the heating chamber 20. The third opening 36 sets the heating chamber 20 in communication with the distribution chamber 22.

The distribution chamber 22 communicates with a plurality of ducts for distribution of the air flow. In the example illustrated in the figures, there are provided a defrosting duct 38, a front ventilation duct 40, a duct 42 for heating the feet of the people travelling in the vehicle, and a duct 44 for ventilation of the rear seats. The duct 42 extends orthogonally with respect to the plane of representation of Figures 1 and 2. The ducts 38, 40, 42 and 44 are associated to the respective valve elements that enable management of distribution of the air flow to the various parts of the passenger compartment of the vehicle.

The device 10 comprises a mixing valve 45 associated to the openings 32, 34 and 36 and designed to regulate the temperature of the air flow in the distribution chamber 22. The mixing valve 45 comprises a control lever 46 articulated to the casing 12 about an axis 48. The end of the control lever 46 opposite to the axis of articulation 48 is articulated to a main flap 50 about an axis 52. The main flap 50 is constituted by a rigid body made of injection-moulded plastic material and has a laterally projecting pin 54 that engages a first arched groove 56 formed on a side wall of the casing 12.

The mixing valve 44 comprises a secondary flap 58 having a first end articulated to an end of the main flap 50 about an axis 60. The end of the secondary flap 58 opposite to the axis of articulation 60 bears a laterally projecting pin 62 that engages slidably a second arched groove 64 formed on the side wall of the casing 12. Also the secondary flap 58 is constituted by a rigid body made of injection-moulded plastic material.

Figures 1 and 2 illustrate the two end positions of the valve element 45. In the position illustrated in Figure 1, the main flap 50 closes the first opening 32, and the secondary flap 58 is bent over the main flap 50 and faces the side of the latter facing the distribution chamber 22. The two openings 34 and 36 are open. In this condition, the air flow is oriented in the direction indicated by the arrows 66 in Figure 1. The air flow traverses the heating chamber 20 before reaching the distribution chamber 22.

In the position illustrated in Figure 2, the main flap 50 closes the second opening 34. The secondary flap 58 closes the third opening 36. In this condition, the air flow follows the direction indicated by the arrow 70 and reaches the distribution chamber 22 without passing through the heating chamber 20. It should be noted that in this second position the heating chamber 20 is completely isolated with respect to the distribution chamber 22 and with respect to the cooling chamber 18. Consequently, the flow of cold air is completely isolated from the heating radiator 28. The mixing valve 45 can assume any intermediate position between the end positions illustrated in Figures 1 and 2. Corresponding to the intermediate positions are intermediate temperatures of the air flow with respect to the ones that are obtained in the end positions of the mixing valve 45 illustrated in Figures 1 and 2.

## Claims

1. A device for treating a flow of air that is to be sent into the passenger compartment of a vehicle, comprising:
- a supporting casing (12) defining a cooling chamber (18), a heating chamber (20), a distribution chamber (22), a first opening (32) that sets the cooling chamber (18) in communication with the distribution chamber (22), a second opening (34) that sets the cooling chamber (18) in communication with the heating chamber (20), and a third opening (36) that sets the heating chamber (20) in communication with the distribution chamber (22);
- an evaporator (24), housed in the cooling chamber (18) and a heating radiator (28), housed in the heating chamber (20); and
- a mixing valve (45), which is mobile between a first position and a second position, in which in the first position the mixing valve (45) closes the first opening (32) and opens the second and third openings and in which in the second position the mixing valve (45) closes the second and third openings (34, 36) and opens the first opening (32),
said device being **characterized in that** the mixing valve (45) comprises:
- a control lever (46) having a first end (48) articulated to the casing (12);
- a main flap (50) articulated to a second end (52) of the control lever (46), the main flap (50) having a laterally projecting pin (52) that engages slidably a first guide (56) fixed with respect to the casing (12); and
- a secondary flap (58) having a first end (60) articulated to the main flap (50) and carrying at a second end a laterally projecting pin (62) that engages slidably a second guide (64) fixed with respect to the casing (12).

2. The device according to Claim 1, **characterized in that** the main flap (50) and the secondary flap (58) are formed by respective rigid bodies made of plastic material.
